# EUROPEAN PATENT APPLICATION

(11) **EP 4 478 794 A1**
(43) Date of publication of application: **18.12.2024**
(21) Application number: 24159220.3
(22) Date of filing: 22.02.2024
(51) Int. Cl.: H04W 52/24, H04W 74/0808, H04W 84/12, H04W 88/08

(54) **ACCESS POINT APPARATUS, STATION APPARATUS, AND COMMUNICATION METHOD**

(30) Priority: 13.06.2023 JP 2023097216
(71) Applicant: Sharp Kabushiki Kaisha, Sakai-ku Sakai-shi, Osaka 590-8522 (JP)
(72) Inventor: TOMEBA, Hiromichi, Sakai City, Osaka, 590-8522 (JP); HAMAGUCHI, Yasuhiro, Sakai City, Osaka, 590-8522 (JP); NAMBA, Hideo, Sakai City, Osaka, 590-8522 (JP)
(74) Representative: Müller Hoffmann & Partner

(57) **Abstract**

A station apparatus according to the present invention is a station apparatus for connecting to an access point apparatus, the station apparatus including a receiver configured to receive a first frame; and a transmitter configured to transmit a response frame for the first frame in a second frequency band that is the same as or different from a first frequency band in which the first frame is received, wherein the transmitter transmits the response frame at a different transmit power in a case of transmitting the response frame in the first frequency band and in a case of transmitting the response frame in the second frequency band. This enables contribution to effective utilization of frequency resources.

## Description

### Technical Field

The present invention relates to an access point apparatus, a station apparatus, and a communication method.

### Background Art

The Institute of Electrical and Electronics Engineers Inc. (IEEE) has continuously been working to update the IEEE 802.11 specification that is a wireless Local Area Network (LAN) standard in order to achieve a higher speed and frequency efficiency of wireless LAN communication. In a wireless LAN, radio communication can be performed using unlicensed bands that can be used without permission (license) by nations or regions. For applications for individuals including an application for domestic use, Internet accesses from residences are wirelessly established by, for example, including wireless LAN access point functions in line termination apparatuses for connection to a Wide Area Network (WAN) line such as the Internet or connecting wireless LAN access point apparatuses to the line termination apparatuses.

In 2021, the specifications of IEEE 802. 11ax were established, and wireless LAN devices conforming to the specifications have appeared on the market. Activities for standardizing IEEE 802.11be as a standard succeeding IEEE 802.11ax have been started, and discussions on IEEE 802.11bn succeeding IEEE 802.11be have been started. As wireless LAN devices are rapidly widely used, studies are in progress, in the current standardization of IEEE 802.11, to further improve a throughput per user in environments where wireless LAN devices are densely located.

In IEEE 802.11be standardization, Multi-Link Operation (MLO) has been discussed in which a communication apparatus uses multiple frequency bands to enable multiple link connections to be maintained (see NPL 1). As an example of the MLO, three link connections are simultaneously operated, including a 2.4 GHz band connection, a 5 GHz band connection, and a 6 GHz band connection. Of course, the combinations of the frequency band, the channel, and the sub-channel are not limited to the above-described combinations and various other combinations are possible. In terms of the frequency band, in the future, high frequency bands such as millimeter waves (45 GHz band, 60 GHz band, etc.) and (sub) terahertz waves (100 GHz to 300 GHz band) may also be used as one link constituting the Multi-Link. The MLO allows a communication apparatus to maintain multiple link connections with different configurations related to radio resources and communication used by the communication apparatus. That is, the communication apparatus can simultaneously maintain link connections in different frequency bands by using the MLO. Not only frame transmission and/or reception can be performed by simultaneously using multiple links, but also link connection for frame transmission and/or reception can be switched (frequency band can be changed) without performing reconnection operation. Note that a link constituting multiple links (Multi-Link) is also referred to as a physical layer link.

### Citation List

### Non Patent Literature

NPL 1: IEEE 802.11-19/0773-08-00be, Nov. 2019

### Summary of Invention

### Technical Problem

The high frequency band provides a large bandwidth per channel, allowing a high throughput to be realized. On the other hand, the high frequency band involves a large radio wave propagation loss (path loss), leading to indispensable assistance of beamforming for compensating the path loss. However, a suggested problem is such that realization of highly accurate beamforming requires advanced hardware and signal processing and that terminal apparatuses required to have reduced power consumption/sizes have difficulty in including a high-quality transmission/reception apparatus for a high frequency band.

### Solution to Problem

An access point apparatus, a station apparatus, and a communication method according to the present invention for solving the aforementioned problems are as follows.
(1) Specifically, a station apparatus according to an aspect of the present invention is a station apparatus for connecting to an access point apparatus, the station apparatus including a receiver configured to receive a first frame, and a transmitter configured to transmit a response frame for the first frame in a second frequency band that is the same as or different from a first frequency band in which the first frame is received, wherein the transmitter transmits the response frame at a different transmit power in a case of transmitting the response frame in the first frequency band and in a case of transmitting the response frame in the second frequency band.
(2) The station apparatus according to an aspect of the present invention is described above in (1), and in a case that the second frequency band includes a frequency lower than the first frequency band, a transmit power in a case that the transmitter transmits the response frame in the second frequency band is lower than a transmit power in a case that the transmitter transmits the response frame in the first frequency band.
(3) The station apparatus according to an aspect of the present invention is described above in (1), and a transmit power for the response frame is equal to or less than a CCA level configured in a BSS to which the station apparatus belongs.
(4) The station apparatus according to an aspect of the present invention is described above in (1), and the station apparatus acquires, from the access point apparatus, information associated with interference power allowed by the access point apparatus, and a transmit power for the response frame is lower than an allowed transmit power calculated from the information associated with the interference power.
(5) The station apparatus according to an aspect of the present invention is described above in (1), and a first response time range used in a case that the response frame is transmitted in the first frequency band and a second response time range used in a case that the response frame is transmitted in the second frequency band are configured respectively, and a range of configured values for the second response time range is wider than a range of configured values for the first response time range.
(6) The station apparatus according to an aspect of the present invention is described above in (1), and the station apparatus connects to a BSS including multiple access point apparatuses including the access point apparatus, and transmits the response frame for the first frame transmitted from the access point apparatus to at least one access point apparatus of the multiple access point apparatuses, the at least one access point apparatus being different from the access point apparatuses included in the BSS.
(7) An access point apparatus according to an aspect of the present invention is an access point apparatus for connecting to a station apparatus, the access point apparatus including a transmitter configured to transmit a first frame, and a receiver configured to receive a response frame for the first frame in a second frequency band that is the same as or different from a first frequency band in which the first frame is transmitted, wherein a transmit power configured for the response frame in a case that the first frequency band is used for transmission is different from a transmit power configured for the response frame in a case that the second frequency band is used for transmission.
(8) A communication method according to an aspect of the present invention is a communication method for a station apparatus for connecting to an access point apparatus, the communication method including the steps of receiving a first frame, and transmitting a response frame for the first frame in a second frequency band that is the same as or different from a first frequency band in which the first frame is received, wherein a transmit power varies in a case that the response frame is transmitted in the first frequency band and in a case that the response frame is transmitted in the second frequency band.

### Advantageous Effects of Invention

According to the present invention, a station apparatus supporting a high frequency band can perform efficient frame exchange using the high frequency band, enabling contribution to effective utilization of frequency resources.

### Brief Description of Drawings

FIG. 1 is a diagram illustrating an example of a frame structure according to an aspect of the present invention.
FIG. 2 is a diagram illustrating an example of a frame structure according to an aspect of the present invention.
FIG. 3 is a diagram illustrating an example of communication according to an aspect of the present invention.
FIG. 4 is a schematic diagram illustrating examples of splitting radio resources according to an aspect of the present invention.
FIG. 5 is a diagram illustrating a configuration example of a communication system according to an aspect of the present invention.
FIG. 6 is a block diagram illustrating a configuration example of a radio communication apparatus according to an aspect of the present invention.
FIG. 7 is a block diagram illustrating a configuration example of a radio communication apparatus according to an aspect of the present invention.
FIG. 8 is a diagram illustrating an example of a frame structure according to an aspect of the present invention.
FIG. 9 is a block diagram illustrating a configuration example of a radio communication apparatus according to an aspect of the present invention.
FIG. 10 is a diagram illustrating frame transmission and/or reception according to an aspect of the present invention.
FIG. 11 is a schematic diagram illustrating a frame transmission and/or reception according to an aspect of the present invention.
FIG. 12 is a schematic diagram illustrating a frame transmission and/or reception according to an aspect of the present invention.
FIG. 13 is a schematic diagram illustrating a frame transmission and/or reception according to an aspect of the present invention.

### Description of Embodiments

A communication system according to the present embodiment includes an access point apparatus (or also referred to as a base station apparatus) and multiple station apparatuses (or also referred to as terminal apparatuses). The communication system and a network including the access point apparatus and the station apparatus will be referred to as a Basic service set (BSS, management range). In addition, the station apparatus according to the present embodiment can have functions of the access point apparatus. Similarly, the access point apparatus according to the present embodiment can have functions of the station apparatus. Accordingly, in a case that a communication apparatus or a radio communication apparatus is simply mentioned below, the communication apparatus or the radio communication apparatus can indicate both the station apparatus and the access point apparatus.

The base station apparatus and the terminal apparatuses in the BSS are assumed to perform communication based on Carrier sense multiple access with collision avoidance (CSMA/CA). Although the present embodiment is intended for an infrastructure mode in which a base station apparatus performs communication with multiple terminal apparatuses, the method of the present embodiment can also be performed in an ad hoc mode in which terminal apparatuses perform communication directly with each other. In the ad hoc mode, a terminal apparatus substitutes for a base station apparatus to form a BSS. The BSS in the ad hoc mode may also be referred to as an Independent Basic Service Set (IBSS). In the following description, a terminal apparatus that forms an IBSS in the ad hoc mode can also be considered to be a base station apparatus. The method of the present embodiment can also be performed in Wi-Fi Direct (trade name) in which terminal apparatuses directly communicate with each other. In Wi-Fi Direct, the terminal apparatuses form a Group instead of the base station apparatus. Hereinafter, the terminal apparatus as a Group owner forming a Group in Wi-Fi Direct can also be regarded as a base station apparatus.

In an IEEE 802.11 system, each apparatus can transmit frames (communication frames) of multiple frame types in a common frame format. The frame is defined in each of the physical (PHY) layer, the Medium access control (MAC) layer, and the Logical Link Control (LLC) layer.

A transmission frame of the PHY layer may be referred to as a physical protocol data unit (PHY protocol data unit (PPDU), or physical layer frame). The PPDU includes a physical layer header (PHY header) including header information and the like for performing signal processing in the physical layer, a physical service data unit (PHY service data unit (PSDU), or MAC layer frame) that is a data unit processed in the physical layer, and the like. The PSDU can include an Aggregated MAC protocol data unit (MPDU) (A-MPDU) in which multiple MPDUs serving as retransmission units in a radio section are aggregated.

A PHY header includes a reference signal such as a Short training field (STF) used for detection, synchronization, and the like of signals, a Long training field (LTF) used for obtaining channel information for demodulating data, and the like and a control signal such as a Signal (SIG) including control information for demodulating data. STFs are classified into a Legacy-STF (L-STF), a High Throughput-STF (HT-STF), a Very High Throughput-STF (VHT-STF), a High Efficiency-STF (HE-STF), an Extremely High Throughput-STF (EHT-STF), and the like in accordance with corresponding standards, and LTFs and SIGs are also similarly classified into an L-LTF, an HT-LTF, a VHT-LTF, an HE-LTF, an L-SIG, an HT-SIG, a VHT-SIG, an HE-SIG, and an EHT-SIG in accordance with on the corresponding standards. The VHT-SIG is further classified into VHT-SIG-A1, VHT-SIG-A2, and VHT-SIG-B. Similarly, the HE-SIG is classified into HE-SIG-A1 to 4 and HE-SIG-B. In addition, on the assumption of technology update in the same standard, a Universal SIGNAL (U-SIG) field including additional control information can be included.

Furthermore, the PHY header can include information for identifying a BSS of a transmission source of the frame (hereinafter, also referred to as BSS identification information). The information for identifying a BSS can be, for example, a Service Set Identifier (SSID) of the BSS or a MAC address of a base station apparatus of the BSS. In addition, the information for identifying a BSS can be a value unique to the BSS (e.g., a BSS Color, and the like) other than an SSID or a MAC address.

The PPDU is modulated in accordance with the corresponding standard. In the IEEE 802.11n standard, for example, the PPDU is modulated into an Orthogonal frequency division multiplexing (OFDM) signal.

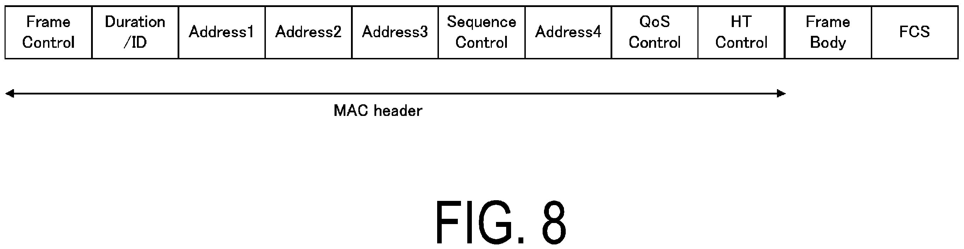

An MPDU includes a MAC layer header (MAC header) including header information and the like for performing signal processing in the MAC layer, a MAC service data unit (MSDU) or a frame body that is a data unit processed in the MAC layer, and a Frame check sequence (FCS) for checking whether there is an error in a frame (FIG. 8). In addition, multiple MSDUs can be aggregated as an Aggregated MSDU (A-MSDU).

The frame types of frames of the MAC layer are roughly classified into three frame types, namely a management frame for managing a connection state and the like between apparatuses, a control frame for managing a communication state between apparatuses, and a data frame including actual transmission data. Each frame type is further classified into multiple kinds of subframe types. The control frame includes a reception completion notification (Acknowledge or Ack or ACK) frame, a transmission request (Request to send or RTS) frame, a reception preparation completion (Clear to send or CTS) frame, and the like. The management frame includes a Beacon frame, a Probe request frame, a Probe response frame, an Authentication frame, an Association request frame, an Association response frame, and the like. The data frame includes a Data frame, a polling (CF-poll) frame, and the like. Each apparatus can recognize the frame type and the subframe type of a received frame by interpreting contents of the frame control field included in the MAC header.

Note that an Ack may include a Block Acknowledgement (Block Ack or BA). A Block Ack can give a reception completion notification with respect to multiple MPDUs.

The beacon frame includes a Field in which a periodicity at which a beacon is transmitted (Beacon interval) and an SSID are described. The base station apparatus can periodically broadcast a beacon frame within a BSS, and each terminal apparatus can recognize the base station apparatus in the surroundings of the terminal apparatus by receiving the beacon frame. The action of the terminal apparatus recognizing the base station apparatus based on the beacon frame broadcast from the base station apparatus may be referred to as Passive scanning. On the other hand, the action of the terminal apparatus searching for the base station apparatus by broadcasting a probe request frame in the BSS may be referred to as Active scanning. The base station apparatus can transmit a probe response frame in response to the probe request frame, and details described in the probe response frame are equivalent to those in the beacon frame.

A terminal apparatus recognizes a base station apparatus and performs association processing with respect to the base station apparatus. The association processing is classified into an Authentication procedure and an Association procedure. A terminal apparatus transmits an authentication frame (authentication request) to a base station apparatus that the terminal apparatus desires to associate with. Once the base station apparatus receives the authentication frame, then the base station apparatus transmits, to the terminal apparatus, an authentication frame (authentication response) including a status code indicating whether authentication can be made for the terminal apparatus. The terminal apparatus can determine whether the base station apparatus has allowed the authentication request from the terminal apparatus by interpreting the status code described in the authentication frame. Note that the base station apparatus and the terminal apparatus can exchange the authentication frame multiple times.

After the authentication procedure, the terminal apparatus transmits an association request frame to the base station apparatus in order to perform the association procedure. Once the base station apparatus receives the association request frame, the base station apparatus determines whether to allow association of the terminal apparatus and transmits an association response frame to notify the terminal apparatus of the intent. In the association response frame, an Association identifier (AID) for identifying the terminal apparatus is described in addition to the status code indicating whether to perform the association processing. The base station apparatus can manage multiple terminal apparatuses by configuring different AIDs for the terminal apparatuses for which the base station apparatus has allowed association.

After the association processing is performed, the base station apparatus and the terminal apparatus perform actual data transmission. In the IEEE 802.11 system, a Distributed Coordination Function (DCF), a Point Coordination Function (PCF), and mechanisms in which the aforementioned mechanisms are enhanced (an Enhanced distributed channel access (EDCA) or a hybrid control mechanism (Hybrid coordination function (HCF)), and the like) are defined. A case that the base station apparatus transmits signals to the terminal apparatus using the DCF will be described below as an example.

In the DCF, the base station apparatus and the terminal apparatus perform Carrier sense (CS) for checking usage of a radio channel in the surroundings of the apparatuses prior to communication. For example, in a case that the base station apparatus serving as a transmitting station receives a signal of a higher level than a predefined Clear channel assessment level (CCA level) on a radio channel, transmission of frames on the radio channel is postponed. Hereinafter, a state in which a signal of a level that is equal to or higher than the CCA level is detected on the radio channel will be referred to as a busy (Busy) state, and a state in which a signal of a level that is equal to or higher than the CCA level is not detected will be referred to as an idle (Idle) state. In this manner, CS performed based on power of a signal actually received by each apparatus (reception power level) is called physical carrier sense (physical CS). Note that the CCA level is also called a carrier sense level (CS level) or a CCA threshold (CCAT). Note that, in a case that a signal of a level that is equal to or higher than the CCA level has been detected, the base station apparatus and the terminal apparatus start to perform an operation of demodulating at least a signal of the PHY layer.

The base station apparatus performs carrier sense in the period of an Inter frame space (IFS) configured in accordance with the type of a frame to be transmitted and determines whether the radio channel is in a busy state or idle state. The period in which the base station apparatus performs carrier sense varies depending on the frame type and the subframe type of the frame to be transmitted by the base station apparatus. In the IEEE 802.11 system, multiple IFSs with different periods are defined, and there are a short frame interval (Short IFS or SIFS) used for a frame with the highest priority given, a polling frame interval (PCF IFS or PIFS) used for a frame with a relatively high priority, a distribution control frame interval (DCF IFS or DIPS) used for a frame with the lowest priority, and the like. In a case of transmitting a data frame with the DCF, the base station apparatus uses the DIFS.

The base station apparatus waits for the DIFS period and then further waits for a random backoff time to prevent frame collision. In the IEEE 802.11 system, a random backoff time called a Contention window (CW) is used. CSMA/CA works with the assumption that a frame transmitted by a certain transmitting station is received by a receiving station in a state in which there is no interference from other transmitting stations. Accordingly, in a case that transmitting stations transmit frames at the same timing, the frames collide against each other, and the receiving station cannot receive them properly. Thus, each transmitting station waits for a randomly configured time before starting transmission, and thus collision of frames can be avoided. In a case that the base station apparatus determines, through carrier sense, that a radio channel is in the idle state, the base station apparatus starts to count down a CW, acquires a transmission right for the first time after the CW becomes zero, and can transmit a frame to the terminal apparatus. Note that, in a case that the base station apparatus determines through the carrier sense that the radio channel is in the busy state during the count-down of the CW, the base station apparatus stops the count-down of the CW. Then, in a case that the radio channel is in the idle state again, then the base station apparatus restarts the count-down of the remaining CW after the wait for the same period as that of the previous IFS.

Next, details of frame reception will be described. A terminal apparatus that is a receiving station receives a frame, interprets the PHY header of the frame, and demodulates the received frame. Then, the terminal apparatus interprets the MAC header of the demodulated signal and thus can recognize whether the frame is addressed to the terminal apparatus itself. Note that the terminal apparatus can also determine the destination of the frame based on information described in the PHY header (for example, a Group identifier (Group ID or GID) described in VHT-SIG-A).

In a case that the terminal apparatus determines that the received frame is addressed to the terminal apparatus and successfully demodulates the frame without any error, the terminal apparatus is to transmit an Ack frame indicating the proper reception of the frame to the base station apparatus that is the transmitting station. The Ack frame is one of frames with the highest priority transmitted only after a wait for the SIFS period (with no random backoff time). The base station apparatus ends the series of communication with the reception of the Ack frame transmitted from the terminal apparatus. Note that, in a case that the terminal apparatus is not able to receive the frame properly, the terminal apparatus does not transmit Ack. Thus, in a case that the Ack frame has not been received from the receiving station (terminal apparatus) for a certain period (a length of SIFS + Ack frame) after the transmission of the frame, the base station apparatus considers the communication to be failed and ends the communication. In this manner, an end of a single communication operation (also called a burst) in the IEEE 802.11 system is to be determined based on whether an Ack frame is received, except for special cases such as a case of transmission of a broadcast signal such as a beacon frame, a case that fragmentation for splitting transmission data is used, or the like.

In a case that the terminal apparatus determines that the received frame is not addressed to the terminal apparatus itself, the terminal apparatus configures a Network allocation vector (NAV) based on the Length of the frame described in the PHY header or the like. The terminal apparatus does not attempt communication during the period configured in the NAV. In other words, because the terminal apparatus performs the same operation as in the case that the terminal apparatus determines the radio channel is in the busy state through physical CS for the period configured in the NAV, the communication control based on the NAV is also called virtual carrier sense (virtual CS). The NAV is also configured by a transmission request (Request To Send or RTS) frame or a reception preparation completion (Clear To Send or CTS) frame, which are introduced to solve a hidden terminal problem in addition to the case that the NAV is configured based on the information described in the PHY header.

Unlike the DCF in which each apparatus performs carrier sense and autonomously acquires the transmission right, with respect to the PCF, a control station called a Point coordinator (PC) controls the transmission right of each apparatus within a BSS. In general, a base station apparatus serves as a PC and acquires the transmission right of a terminal apparatus within a BSS.

A communication period using the PCF includes a Contention Free Period (CFP) and a Contention Period (CP). Communication is performed based on the aforementioned DCF during a CP, and a PC controls the transmission right during a CFP. The base station apparatus serving as a PC broadcasts a beacon frame with description of a CFP period (CFP Max duration) and the like in a BSS prior to communication with a PCF. Note that the PIFS is used for transmission of the beacon frame broadcast at the time of a start of transmission by the PCF, and the beacon frame is transmitted without waiting for the CW. The terminal apparatus that has received the beacon frame configures the CFP period described in the beacon frame in a NAV. Hereinafter, the terminal apparatus can acquire the transmission right only in a case of receiving a signal (e.g., a data frame including CF-poll) for signaling the acquisition of the transmission right transmitted by the PC, until the NAV elapses or a signal (e.g., a data frame including CF-end) broadcasting the end of the CFP in the BSS is received. Note that, because no packet collision occurs in the same BSS during the CFP period, each terminal apparatus does not take a random backoff time used for the DCF.

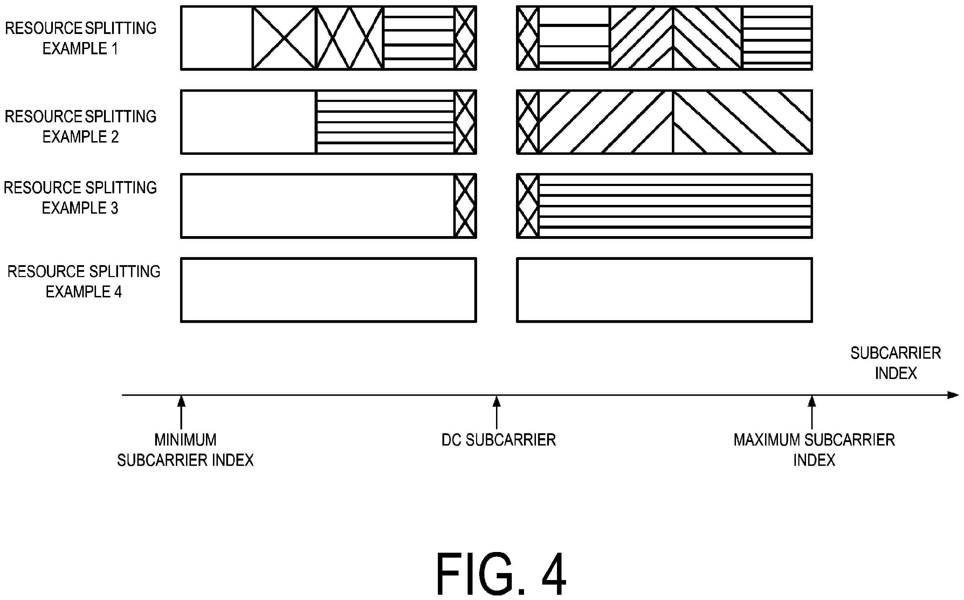

A radio medium can be split into multiple Resource Units (RUs). FIG. 4 is a schematic diagram illustrating an example of a split state of a radio medium. In the resource splitting example 1, for example, a radio communication apparatus can split a frequency resource (subcarrier) that is a radio medium into nine RUs. Similarly, in the resource splitting example 2, the radio communication apparatus can split a subcarrier that is a radio medium into five RUs. It is a matter of course that the resource splitting examples illustrated in FIG. 4 are merely examples, and for example, the multiple RUs can include a different number of subcarriers. The radio medium that is split into RUs can include not only a frequency resource but also a spatial resource. The radio communication apparatus (e.g., an AP) can transmit frames to multiple terminal apparatuses (e.g., multiple STAs) at the same time by allocating frames addressed to different terminal apparatuses to the respective RUs. An AP can describe information indicating a split state of the radio medium (Resource allocation information) as common control information in the PHY header of the frame transmitted by the AP itself. Moreover, the AP can describe information indicating an RU to which a frame addressed to each STA is allocated (resource unit assignment information) as unique control information in the PHY header of the frame transmitted by the AP itself.

Multiple terminal apparatuses (e.g., multiple STAs) can transmit frames at the same time by allocating and transmitting the frames to and in the respective RUs allocated to themselves. The multiple STAs can perform frame transmission after waiting for a prescribed period after receiving the frame including trigger information transmitted from the AP (Trigger frame or TF). Each STA can recognize the RU allocated to the STA itself based on the information described in the TF. Each STA can acquire the RU through random access with reference to the TF.

The AP can allocate multiple RUs to one STA at the same time. The multiple RUs can include continuous subcarriers or can include discontinuous subcarriers. The AP can transmit one frame using multiple RUs allocated to one STA or can transmit multiple frames after allocating them to different RUs. At least one of the multiple frames can be a frame including common control information for multiple terminal apparatuses that transmit Resource allocation information.

One STA can be allocated multiple RUs by the AP. The STA can transmit one frame using the multiple allocated RUs. Also, the STA can use the multiple allocated RUs to transmit multiple frames allocated to different RUs. The multiple frames each can be a frame of a different frame type.

The AP can allocate multiple AIDs to one STA. The AP can allocate an RU to each of the multiple AIDs allocated to the one STA. The AP can transmit different frames using the respective RUs allocated to the multiple AIDs allocated to the one STA. The different frames each can be a frame of a different frame type.

One STA can be allocated multiple AIDs by the AP. The one STA can be allocated an RU with respect to each of the multiple allocated AIDs. The one STA recognizes all of the RUs allocated to the respective multiple AIDs allocated to the STA itself as RUs allocated to the STA and can transmit one frame using the multiple allocated RUs. In addition, the one STA can transmit multiple frames using the multiple allocated RUs. At this time, the STA can transmit the multiple frames with information indicating the AIDs associated with the respective allocated RUs described therein. The AP can transmit different frames using the respective RUs allocated to the multiple AIDs allocated to the one STA. The different frames can be frames of different frame types.

Hereinafter, the base station apparatus and the terminal apparatuses may be collectively referred to as radio communication apparatuses or communication apparatuses. In other words, radio communication apparatuses include a base station apparatus and a terminal apparatus. Information exchanged in a case that a certain radio communication apparatus performs communication with another radio communication apparatus may also be referred to as data.

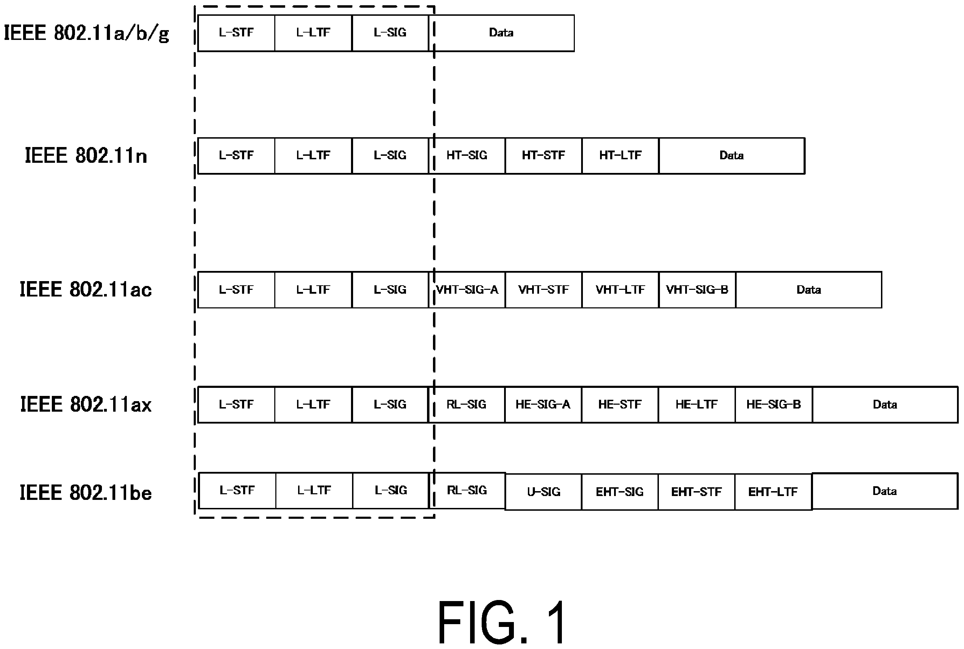

A radio communication apparatus includes any one of or both the function of transmitting a PPDU and a function of receiving a PPDU. FIG. 1 is a diagram illustrating examples of configurations of a PPDU transmitted by a radio communication apparatus. A PPDU that is compliant with the IEEE 802.11a/b/g standard includes L-STF, L-LTF, L-SIG, and a Data frame (a MAC Frame, a MAC frame, a payload, a data part, data, information bits, and the like). A PPDU that is compliant with the IEEE 802.11n standard includes L-STF, L-LTF, L-SIG, HT-SIG, HT-STF, HT-LTF, and a Data frame. A PPDU that is compliant with the IEEE 802.11 ac standard includes some or all of L-STF, L-LTF, L-SIG, VHT-SIG-A, VHT-STF, VHT-LTF, VHT-SIG-B, and a Data frame. A PPDU studied in the IEEE 802.11ax standard includes some or all of L-STF, L-LTF, L-SIG, RL-SIG in which L-SIG is temporally repeated, HE-SIG-A, HE-STF, HE-LTF, HE-SIG-B, and a Data frame. A PPDU studied in the IEEE 802.11be standard includes some or all of L-STF, L-LTF, L-SIG, RL-SIG, U-SIG, EHT-SIG, EHT-STF, HET-LTF, and a Data frame.

L-STF, L-LTF, and L-SIG surrounded by the dotted line in FIG. 1 are configurations commonly used in the IEEE 802.11 standard (hereinafter, L-STF, L-LTF, and L-SIG will also be collectively referred to as an L-header). For example, a radio communication apparatus that is compliant with the IEEE 802.1 1a/b/g standard can appropriately receive an L-header in a PPDU that is compliant with the IEEE 802.11n/ac standard. A radio communication apparatus that is compliant with the IEEE 802.11a/b/g standard can receive the PPDU that is compliant with the IEEE 802.11n/ac standard while considering it to be a PPDU that is compliant with the IEEE 802.11a/b/g standard.

However, because the radio communication apparatus that is compliant with the IEEE 802.1 1a/b/g standard cannot demodulate the PPDU that is compliant with the IEEE 802.1 1n/ac standard following the L-header, it is not possible to demodulate information about a Transmitter Address (TA), a Receiver Address (RA), and a Duration/ID field used for configuring a NAV.

As a method for the radio communication apparatus that is compliant with the IEEE 802.11a/b/g standard to appropriately configure the NAV (or perform a receiving operation for a prescribed period), IEEE 802.11 defines a method of inserting Duration information to the L-SIG. Information about a transmission speed in the L-SIG (a RATE field, an L-RATE field, an L-RATE, an L_DATARATE, and an L_DATARATE field) and information about a transmission period (a LENGTH field, an L-LENGTH field, and an L-LENGTH) are used by the radio communication apparatus that is compliant with the IEEE 802.1 1a/b/g standard to appropriately configure a NAV.

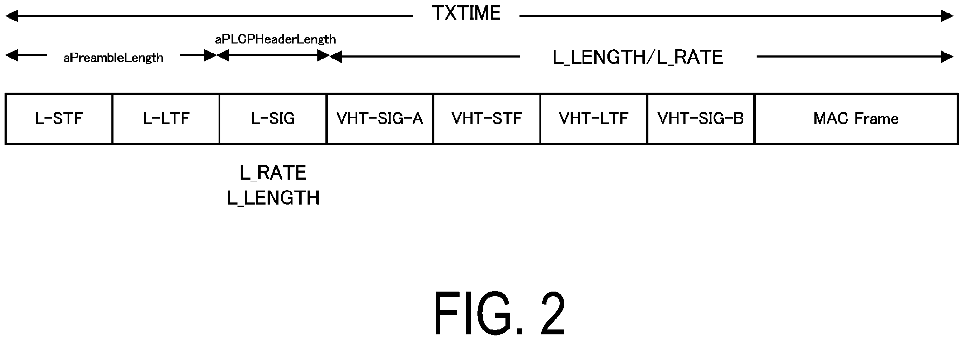

FIG. 2 is a diagram illustrating an example of a method for Duration information inserted into an L-SIG. Although a PPDU configuration that is compliant with the IEEE 802.11ac standard is illustrated as an example in FIG. 2, a PPDU configuration is not limited thereto. A PPDU configuration that is compliant with the IEEE 802.11n standard or a PPDU configuration that is compliant with the IEEE 802.11ax standard may be employed. TXTIME includes information about a length of a PPDU, aPreambleLength includes information about a length of a preamble (L-STF + L-LTF), and aPLCPHeaderLength includes information about a length of a PLCP header (L-SIG). L_LENGTH is calculated based on Signal Extension that is a virtual period configured for compatibility with the IEEE 802.11 standard, Nₒₚₛ related to L_RATE, aSymbolLength that is information about a period of one symbol (a symbol, an OFDM symbol, or the like), aPLCPServiceLength indicating the number of bits included in PLCP Service field, and aPLCPConvolutionalTailLength indicating the number of tail bits of a convolutional code. The radio communication apparatus can calculate L_LENGTH and insert L_LENGTH into L-SIG. The radio communication apparatus can calculate L-SIG Duration. L-SIG Duration indicates information about a PPDU including L_LENGTH and information about a period that is the sum of periods of Ack and SIFS expected to be transmitted by the destination radio communication apparatus in response to the PPDU.

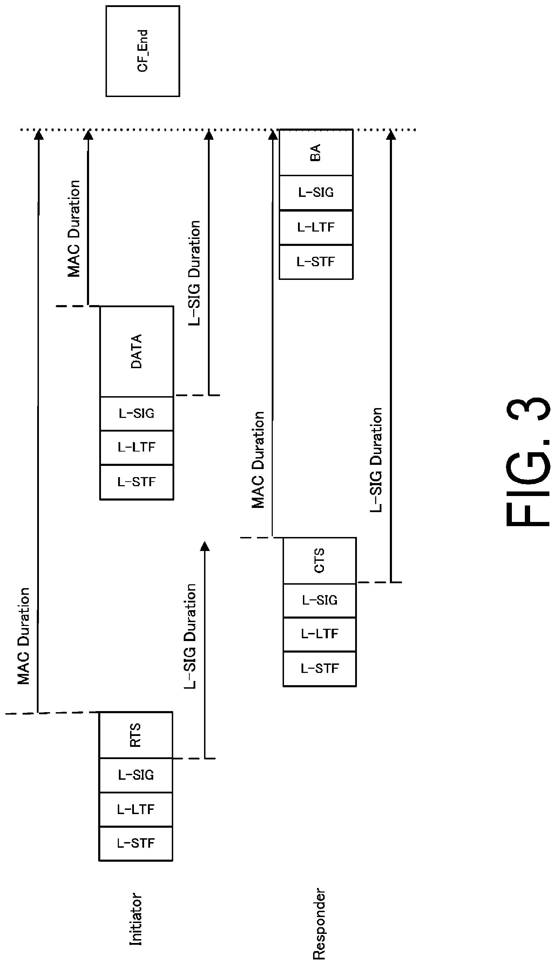

FIG. 3 is a diagram illustrating an example of L-SIG Duration in L-SIG TXOP Protection. DATA (a frame, a payload, data, and the like) include some of or both the MAC frame and the PHY header. BA includes Block Ack or Ack. A PPDU includes L-STF, L-LTF, and L-SIG and can further include any one or more of DATA, BA, RTS, or CTS. Although L-SIG TXOP Protection using RTS/CTS is illustrated in the example illustrated in FIG. 3, CTS-to-Self may be used. Here, MAC Duration is a period indicated by a value of Duration/ID field. Initiator can transmit a CF-End frame for providing a notification regarding an end of the L-SIG TXOP Protection period.

Next, a method of identifying a BSS from a frame received by a radio communication apparatus will be described. In order for a radio communication apparatus to identify a BSS from a received frame, the radio communication apparatus that transmits a PPDU preferably inserts information for identifying the BSS (BSS color, BSS identification information, or a value unique to the BSS) into the PPDU. The information indicating the BSS color can be described in HE-SIG-A.

The radio communication apparatus can transmit L-SIG multiple times (L-SIG Repetition). For example, demodulation accuracy of L-SIG is improved by the radio communication apparatus on the reception side receiving L-SIG transmitted multiple times by using Maximum Ratio Combining (MRC). Moreover, in a case that reception of L-SIG is properly completed using MRC, the radio communication apparatus can interpret the PPDU including the L-SIG as a PPDU that is compliant with the IEEE 802.11ax standard.

Even during the operation of receiving the PPDU, the radio communication apparatus can perform a reception operation of a PPDU other than the corresponding PPDU (e.g., the preamble, L-STF, L-LTF, and the PHY header prescribed by IEEE 802.11) (also referred to as a double-reception operation). In a case that a part of a PPDU other than the PPDU is detected during the operation of receiving the PPDU, the radio communication apparatus can update a part or an entirety of information about a destination address, a transmission source address, a PPDU, or a DATA period.

An Ack and a BA can also be referred to as a response (response frame). A probe response, an authentication response, and an association response can also be referred to as a response.

### 1. First Embodiment

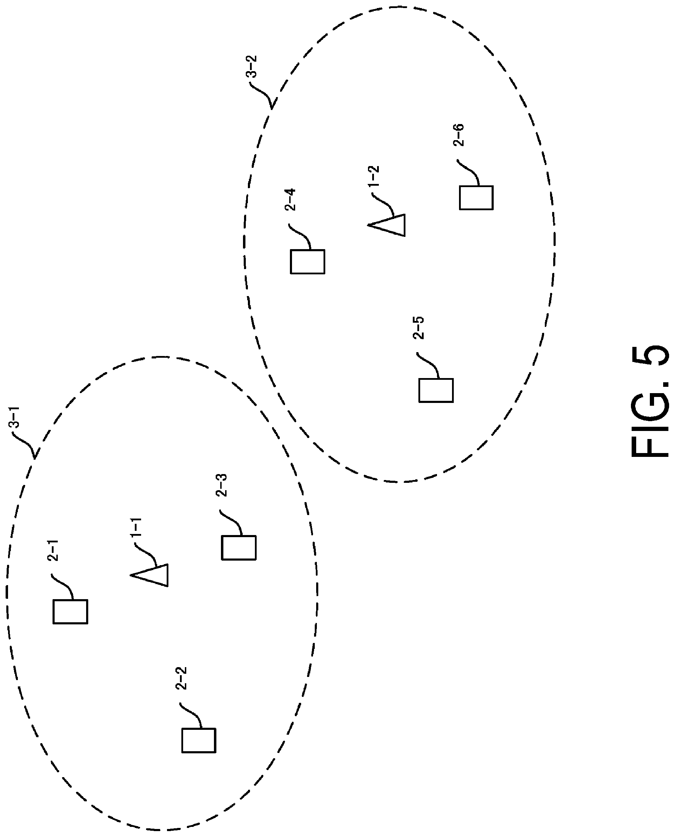

FIG. 5 is a diagram illustrating an example of a radio communication system according to the present embodiment. A radio communication system 3-1 includes a radio communication apparatus 1-1 and communication apparatuses 2-1 to 2-3. Note that the radio communication apparatus 1-1 may also be referred to as a base station apparatus 1-1, and the communication apparatuses 2-1 to 2-3 may also be referred to as terminal apparatuses 2-1 to 2-3. Each of the communication apparatuses 2-1 to 2-3 (terminal apparatuses 2-1 to 2-3) may also be referred to as a communication apparatus 2A (terminal apparatus 2A), respectively, as an apparatus connected to the communication apparatus 1-1. The communication apparatus 1-1 and the communication apparatus 2A are wirelessly associated with each other and are in a state in which they can transmit and/or receive PPDUs to and from each other. The radio communication system according to the present embodiment may include a radio communication system 3-2 in addition to the radio communication system 3-1. The radio communication system 3-2 includes a communication apparatus 1-2 and communication apparatuses 2-4 to 2-6. Note that the communication apparatus 1-2 may also be referred to as a base station apparatus 1-2 and the communication apparatuses 2-4 to 2-6 may also be referred to as terminal apparatuses 2-4 to 2-6. Each of the communication apparatuses 2-4 to 2-6 (terminal apparatuses 2-4 to 2-6) may also be referred to as a communication apparatus 2B (terminal apparatus 2B), respectively, as an apparatus connected to the communication apparatus 1-2. Although the radio communication system 3-1 and the radio communication system 3-2 form different BSSs, this does not necessarily mean that Extended Service Sets (ESSs) are different. An ESS indicates a service set forming a Local Area Network (LAN). In other words, radio communication apparatuses belonging to the same ESS can be regarded as belonging to the same network from a higher layer. The BSSs are connected via a Distribution System (DS) and form an ESS. Note that each of the radio communication systems 3-1 and 3-2 can further include multiple radio communication apparatuses.

In FIG. 5, it is assumed that signals transmitted by the communication apparatus 2A reach the communication apparatus 1-1 and the communication apparatus 2B while the signals do not reach the communication apparatus 1-2 in the following description. In other words, in a case that the communication apparatus 2A transmits a signal using a certain channel, the communication apparatus 1-1 and the communication apparatus 2B determine that the channel is in the busy state, whereas the communication apparatus 1-2 determines that the channel is in the idle state. It is assumed that signals transmitted by the communication apparatus 2B arrive at the communication apparatus 1-2 and the communication apparatus 2A, but do not arrive at the communication apparatus 1-1. In other words, in a case that the communication apparatus 2B transmits a signal using a certain channel, the communication apparatus 1-2 and the communication apparatus 2A determine that the channel is in the busy state, whereas the communication apparatus 1-1 determines that the channel is in the idle state.

A Multi Link Device (MLD) is a device capable of multi-link communication, and an access point apparatus corresponding to the MLD is referred to as an MLD access point apparatus, and a station apparatus corresponding to the MLD is referred to as an MLD station apparatus. The MLD access point apparatus and the MLD station apparatus are also collectively referred to as an MLD radio communication apparatus. In the present embodiment, the above-described communication apparatuses 1-1, 1-2, 2A, and 2B are described as MLD radio communication apparatuses. However, in actual operation, not all radio communication apparatuses in the radio communication system need support the MLD.

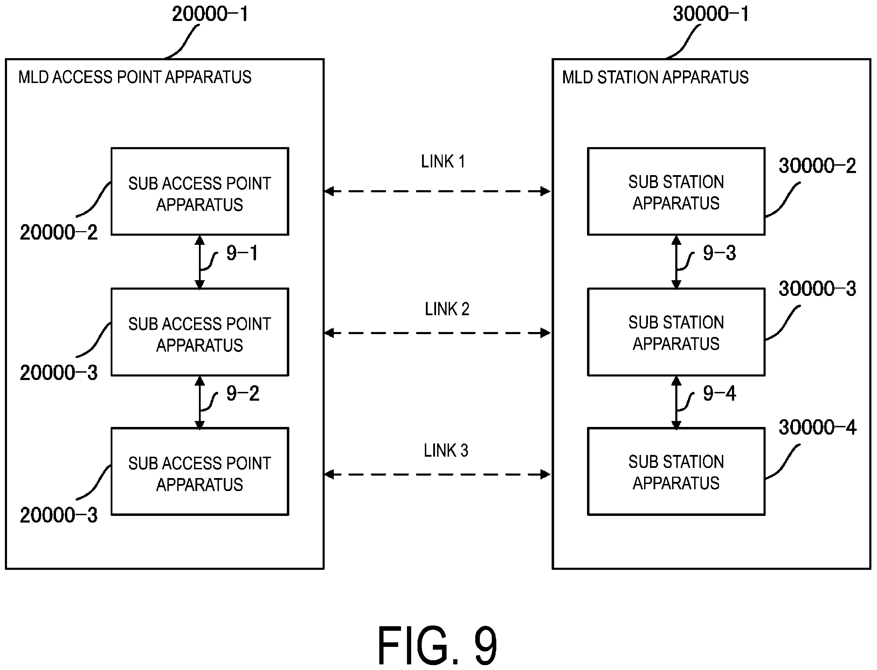

An MLD access point apparatus 20000-1 and an MLD station apparatus 30000-1 will be described with reference to FIG. 9. The MLD radio communication apparatus includes multiple sub radio communication apparatuses corresponding to frequency bands (or channels or sub-channels) of links (also referred to as physical layer links) constituting the multi-link. FIG. 9 illustrates an example in which the MLD access point apparatus 20000-1 includes three sub radio communication apparatuses, in this case, three sub access point apparatuses (20000-2, 20000-3, and 20000-4), but the number of sub access point apparatuses is an arbitrary number of two or more. Similarly, although FIG. 9 illustrates an example in which the MLD station apparatus 30000-1 includes three sub radio communication apparatuses, in this case, three sub station apparatuses (30000-2, 30000-3, and 30000-4), the number of sub station apparatuses is an arbitrary number of two or more. Note that the sub radio communication apparatus (sub access point apparatus, sub station apparatus, or the like) may include a part of a circuit in the radio communication apparatus, and may be referred to as a sub radio communication unit (sub access point unit, sub station unit).

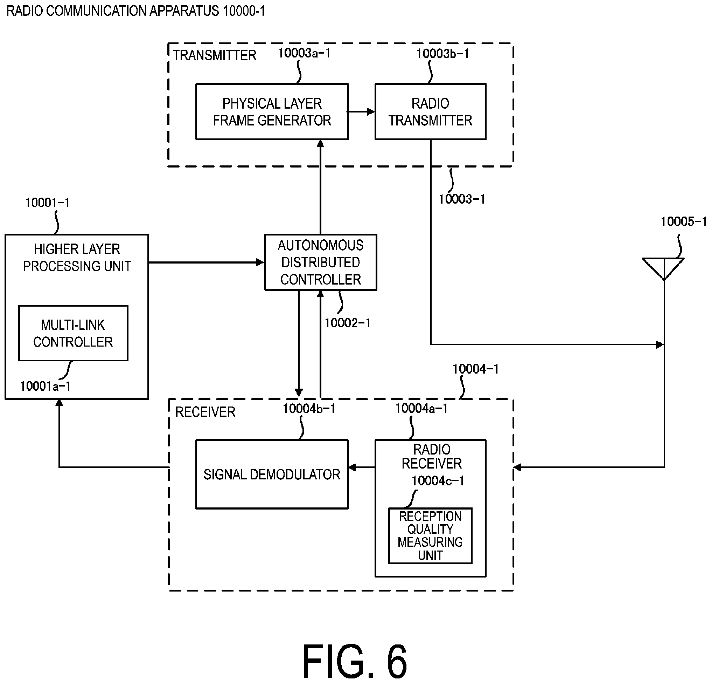

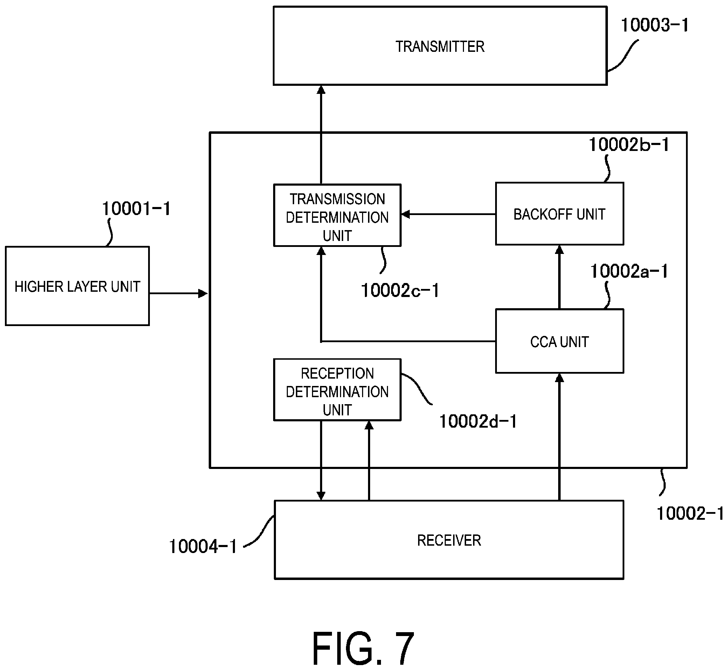

Although FIG. 9 illustrates an example in which multiple sub radio communication apparatuses are configured as logically separate blocks, the sub radio communication apparatuses may be physically configured as one radio communication apparatus. Alternatively, the multiple sub radio communication apparatuses may be configured as physically separate sub radio communication apparatuses, and in this case, each sub access point apparatus transmits and/or receives necessary information through connection lines 9-1 and 9-2, and each sub station apparatus transmits and receives necessary information through connection lines 9-3 and 9-4. The present embodiment mainly relates to the former case, in other words, the multiple sub radio communication apparatuses are assumed to be configured as a physically one radio communication apparatus (10000-1), and the configuration will be described below with reference to FIG. 6 and FIG. 7.

Note that the number of sub access point apparatuses included in one MLD access point apparatus and the number of sub station apparatuses included in one MLD station apparatus may vary depending on the grade, class, capability of each MLD radio communication apparatus, and the like. An MLD radio communication apparatus of a higher grade, a higher class, or higher capability may include more sub radio communication apparatuses (sub access point apparatuses and sub station apparatuses) to be mounted. In other words, the sub radio communication apparatuses (sub access point apparatuses and sub station apparatuses) constituting each MLD radio communication apparatus located in one radio communication system vary depending on the grade, class, and capability, and the numbers of the apparatuses need not be the same.

The sub station apparatus 30000-2 is connected (associated) to the sub access point apparatus 20000-2 and establishes a link 1. The sub station apparatus 30000-3 is connected (associated) to the sub access point apparatus 20000-3 and establishes a link 2. The sub station apparatus 30000-4 is connected (associated) to the sub access point apparatus 20000-4 and establishes a link 3. In the description of the present embodiment, the number of links constituting the multi-link is three, but is not limited to this and may be any number. In the description of the present embodiment, the carrier frequency of the link 1 is assumed to be in the 2. 4 GHz band, the carrier frequency of the link 2 is assumed to be in the 5 GHz band, and the carrier frequency of the link 3 is assumed to be in the 6 GHz band. However, the frequency band used by each link can be arbitrarily configured from among the frequency bands, channels, and sub-channels supported by the radio communication system, such as 2.4 GHz band, 5 GHz band, 6 GHz band, and 60 GHz band, and may be changed according to the legal regulations of each country.

FIG. 6 is a diagram illustrating an example of an apparatus configuration of the radio communication apparatus 10000-1. The radio communication apparatus 10000-1 includes a higher layer processing unit (higher layer processing step) 10001-1, an autonomous distributed controller (autonomous distributed control step) 10002-1, a transmitter (transmission step) 10003-1, a receiver (reception step) 10004-1, and an antenna unit 10005-1.

The higher layer processing unit 10001-1 performs information processing for layers higher than the physical layer, for example, the MAC layer and the LLC layer in regard to information (information related to a transmitted frame, a Management Information Base (MIB), and the like) handled in the radio communication apparatus itself and a frame received from another radio communication apparatus. The multi-link controller 10001a-1 may be included in the higher layer processing unit 10001-1, but may be independent of the higher layer processing unit 10001-1.

The higher layer processing unit 10001-1 can notify the autonomous distributed controller 10002-1 of information related to a frame and a traffic transmitted to a radio medium. The information may be control information included in a management frame such as a beacon, for example, or may be measurement information reported by another radio communication apparatus to the radio communication apparatus. Moreover, the information may be control information included in a management frame or a control frame with the destination not limited (the information may be directed to the apparatus, may be directed to another apparatus, may be broadcasting, or may be multicasting).

FIG. 7 is a diagram illustrating an example of an apparatus configuration of the autonomous distributed controller 10002-1. The controller 10002-1 includes a CCA unit (CCA step) 10002a-1, a backoff unit (backoff step) 10002b-1, a transmission determination unit (transmission determination step) 10002c-1, and a reception determination unit (reception determination step) 10002d-1.

The CCA processor 10002a-1 can perform determination of a state of a radio resource (including determination between a busy state and an idle state) using any one of or both information related to reception signal power received via the radio resource and information related to the reception signal (including information after decoding) provided as a notification from the receiver 10004-1. The CCA unit 10002a-1 can notify the backoff unit 10002b-1 and the transmission determination unit 10002c-1 of the state determination information of the radio resources.

The backoff unit 10002b-1 can perform backoff using the state determination information of the radio resources. The backoff unit 10002b-1 has a function of generating a CW and counting down the CW. For example, the count-down of the CW is performed in a case that the state determination information of the radio resources indicates idle, and the count-down of the CW can be stopped in a case that the state determination information of the radio resources indicates busy. The backoff unit 10002b-1 can notify the transmission determination unit 10002c-1 of the value of the CW.

The transmission determination unit 10002c-1 performs transmission determination using either of or both the state determination information of the radio resources or/and the value of the CW. For example, the notification of transmission determination information can be provided to the transmitter 10003-1 in a case that the state determination information of the radio resources indicates idle and the value of the CW is zero. The notification of the transmission determination information can be provided to the transmitter 10003-1 in a case that the state determination information of the radio resources indicates idle.

The transmitter 10003-1 includes a physical layer frame generator (physical layer frame generation step) 10003a-1 and a radio transmitter (radio transmission step) 10003b-1. The physical layer frame generator 10003a-1 has a function of generating a physical layer frame (PPDU) based on the transmission determination information, the notification of which is provided from the transmission determination unit 10002c-1. The physical layer frame generator 10003a-1 performs error correction coding, modulation, precoding filter multiplication, and the like on frames sent from the higher layer. The physical layer frame generator 10003a-1 notifies the radio transmitter 10003b-1 of the generated physical layer frame.

The reception determination unit 10002d-1 can indicate reception to the receiver 10004-1. A station apparatus in a Power Management mode (a Sleep mode or a Power Save mode) normally intermittently receives management frames such as beacons. Whether the access point apparatus buffers a frame addressed to the station apparatus can be determined from information included in the beacon notified to the autonomous distributed controller 10002-1 by the receiver 10004-1. In a case that the access point apparatus buffers the frame addressed to the station apparatus, the reception determination unit 10002d-1 indicates reception of the frame to the receiver 10004-1.

The operation of the station apparatus in the Power Management mode will be described in detail. The station apparatus in the Power Management mode normally intermittently receives management frames such as beacons. The beacon includes Information Elements (IEs, also referred to simply as "elements" or "Elements") related to various kinds of information. A Traffic Indication Map (TIM) IE, which is one of the IEs, indicates whether the access point apparatus buffers (accumulates, leaves pending transmission of) a frame addressed to the station apparatus in the Power Management mode. In one example, 16 bits are allocated to a Partial Virtual Bitmap, and each bit indicates the presence or absence of a frame buffered by the access point apparatus, the frame being addressed to each AID (to each station apparatus). A set bit indicates that a frame is buffered, and a reset bit indicates that no frame is buffered. Normally, setting a bit to "1" is defined as "set", and setting a bit to "0" is defined as "reset". The definition may be made by other values; for example, the above-described values may be used in an opposite manner by defining, as "set", setting a bit to "0", and defining, as "reset", setting a bit to "1".

A Bitmap Control field contains Bitmap Offset information. For example, in a case that the Bitmap Offset value is 0, each of the bits in the Partial Virtual Bitmap field indicates whether any frame is buffered by a respective one of the station apparatuses corresponding to AID 1 to AID 16 sequentially from the left. The bits at positions corresponding to AID 1, AID 4, and AID 8 are set, and this means that the access point apparatus buffers frames addressed to AID 1, AID 4, and AID 8. In a case that the Bitmap Offset value is "1" (for the sake of simplicity, an offset of one byte is assumed to be given, but depending on the specification, the offset may be multiplied by a constant, for example, a double offset of two bytes may be given. The offset may be expressed in bits), each of the bits in the Partial Virtual Bitmap field indicates whether any frame is buffered by a respective one of the station apparatuses corresponding to AID 9 to AID 24 sequentially from the left. The bits at positions corresponding to AID 9, AID 12, and AID 16 are set, and this means that the access point apparatus buffers frames addressed to AID 9, AID 12, and AID 16. In this way, even in a case that the number of bits allocated to the Partial Virtual Bitmap field is limited, by adjusting the Bitmap Offset value, more AID s can be represented, that is, more station apparatuses can be notified of the presence or absence of frames buffered in the access point apparatus.

Although the physical layer frame generator performs error correction coding on the information bits transferred from the MAC layer, a circuitry in which the error correction coding (coding block length) is performed is not limited. For example, the physical layer frame generator can divide the information bit sequence transferred from the MAC layer into information bit sequences having a prescribed length to perform error correction coding on each of the sequences, and thus can make the sequences into multiple coding blocks. Note that dummy bits can be inserted into the information bit sequence transferred from the MAC layer in a case that coding blocks are configured.

The frame generated by the physical layer frame generator 10003a-1 includes control information. The control information includes information indicating to which RU the data addressed to each radio communication apparatus is mapped (here, the RU including both frequency resources and spatial resources). The frame generated by the physical layer frame generator 10003a-1 includes a trigger frame for indicating, to the radio communication apparatus that is a destination terminal, frame transmission. The trigger frame includes information indicating the RU to be used by the radio communication apparatus that has received the indication for the frame transmission to transmit the frame.

The radio transmitter 10003b-1 converts the physical layer frame generated by the physical layer frame generator 10003a-1 into a signal in a Radio Frequency (RF) band to generate a radio frequency signal. Processing performed by the radio transmitter 10003b-1 includes digital-to-analog conversion, filtering, frequency conversion from a baseband to an RF band, and the like.

The receiver 10004-1 includes a radio receiver (radio reception step) 10004a-1, a signal demodulator (signal demodulation step) 10004b-1, and a reception quality measuring unit (reception quality measuring step) 10004c-1.

The reception quality measuring unit 10004c-1 generates information related to reception quality from a signal in the RF band received by the antenna unit 10005-1. The information related to the signal quality includes a reception power level, a Signal to Noise Ratio (SNR), and the like. The receiver 10004-1 may notify the autonomous distributed controller 10002-1 (in particular, the CCA unit 10002a-1) and the higher layer processing unit 10001-1 (in particular, the multi-link controller 10001a-1) of the information related to the reception quality and the information related to the reception signals. The receiver 10004-1 may also notify the autonomous distributed controller 10002-1 and the higher layer processing unit 10001-1 of other information.

The radio receiver 10004a-1 has a function of converting a signal in the RF band received by the antenna unit 10005-1 into a baseband signal and generating a physical layer signal (e.g., a physical layer frame). Processing performed by the radio receiver 10004a-1 includes frequency conversion processing from the RF band to the baseband, filtering, and analog-to-digital conversion.

The signal demodulator 10004b-1 has a function of demodulating a physical layer signal generated by the radio receiver 10004a-1. Processing performed by the signal demodulator 10004b-1 includes channel equalization, demapping, error correction decoding, and the like. The signal demodulator 10004b-1 can extract, from a physical layer signal, information included in the PHY header, information included in the MAC header, and information included in the frame, for example. The signal demodulator 10004b-1 can notify the higher layer processing unit 10001-1 of the extracted information. Note that the signal demodulator 10004b-1 can extract any one or all of the information included in the PHY header, the information included in the MAC header, and the information included in a reception frame.

The antenna unit 10005-1 includes a function of transmitting the radio frequency signal generated by the radio transmitter 10003b-1 to a radio space. Also, the antenna unit 10005-1 includes a function of receiving the radio frequency signal and passing the radio frequency signal to the radio receiver 10004a-1.

The multi-link controller 10001a-1 receives the information related to the reception quality of the links (the frequency bands, the channels, and the sub-channels) from the reception quality measuring unit 10004c-1, determines whether the respective links are good or bad, and determines which links are selected and used to form the multi-link. The information related to the reception quality includes a reception power level, a Signal to Noise Ratio (SNR), and the like, but is not limited thereto.

The radio communication apparatus 10000-1 can cause radio communication apparatuses in the surroundings of the radio communication apparatus 10000-1 to configure NAV corresponding to a period during which the radio communication apparatus uses a radio medium by describing information indicating the period in the PHY header or the MAC header of the frame to be transmitted. For example, the radio communication apparatus 10000-1 can describe the information indicating the period in the Duration/ID field or a Length field of the frame to be transmitted. The NAV period configured to radio communication apparatuses in the surroundings of the radio communication apparatus will be referred to as a TXOP period (or simply TXOP) acquired by the radio communication apparatus 10000-1. The radio communication apparatus 10000-1 that has acquired the TXOP is referred to as a TXOP holder. The type of frame to be transmitted by the radio communication apparatus 10000-1 to acquire TXOP is not limited to any frame type, and the frame may be a control frame (e.g., an RTS frame or a CTS-to-self frame) or may be a data frame.

The radio communication apparatus 10000-1 that is a TXOP holder can transmit the frame to radio communication apparatuses other than the radio communication apparatus during the TXOP. In a case that the radio communication apparatus 10000-1 is a TXOP holder, the radio communication apparatus 10000-1 can transmit a frame to the communication apparatus 2A during the TXOP period. The radio communication apparatus 10000-1 can indicate, to the communication apparatus 2A, a frame transmission addressed to the radio communication apparatus 10000-1 during the TXOP period. The radio communication apparatus 10000-1 can transmit, to the communication apparatus 2A, a trigger frame including information indicating a frame transmission addressed to the radio communication apparatus 10000-1 during the TXOP period.

The radio communication apparatus 10000-1 may acquire a TXOP for the entire communication band (e.g., Operation bandwidth) in which frame transmission is likely to be performed, or may acquire a TXOP for a specific communication band (Band) such as a communication band in which frames are actually transmitted (e.g., Transmission bandwidth).

The radio communication apparatus that provides an indication for transmitting a frame in the TXOP period acquired by the radio communication apparatus 10000-1 is not necessarily limited to radio communication apparatuses associated to the radio communication apparatus. For example, the radio communication apparatus can provide an indication for transmitting frames to radio communication apparatuses that are not associated to the radio communication apparatus in order to cause the radio communication apparatuses in the surroundings of the radio communication apparatus to transmit management frames such as a Reassociation frame or control frames such as an RTS/CTS frame.

Furthermore, TXOP in EDCA that is a data transmission method different from DCF will also be described. The IEEE 802.11e standard relates to the EDCA, and defines the TXOP from the perspective of Quality of Service (QoS) assurance for various services such as video transmission or VoIP (Voice over Internet Protocol). The services are roughly classified into four access categories, namely VOice (VO), VIdeo (VI), Best Effort (BE), and BacK ground (BK). In general, the services include VO, VI, BE, and BK, starting with the highest priority in this order. Each of the access categories has parameters including CWmin as a minimum value of CW, CWmax as a maximum value, Arbitration IFS (AIFS) as a type of IFS, and TXOP limit as an upper limit value of the transmission opportunity, which are configured to give a difference in the priority. For example, it is possible to perform data transmission prioritized over the other access categories by setting CWmin, CWmax, and AIFS of VO with the highest priority for the purpose of voice transmission equal to a relatively small value as compared with the other access categories. For example, for the VI, where the amount of transmission data is relatively large due to video transmission, the TXOP limit can be configured to be larger, so that the transmission opportunity can be longer than the other access categories. In this manner, four parameter values of each of the access categories are adjusted for the purpose of QoS assurance in accordance with various services.

In the present embodiment, the signal demodulator 10004b-1 of the radio communication apparatus 10000-1 can perform a decoding processing for the received signal in the physical layer, and perform error detection. Here, the decoding processing includes decoding processing for error correction codes applied to the received signal. Here, the error detection includes error detection using an error detection code (e.g., a cyclic redundancy check (CRC) code) that has been added to the received signal in advance, and error detection using an error correction code (e.g., low-density parity-check code (LDPC)) having an error detection function from the first. The decoding processing in the physical layer can be applied for each coding block.

The higher layer processing unit 10001-1 transfers the result of decoding of the physical layer by the signal demodulator 10004b-1 to the MAC layer. In the MAC layer, the signal of the MAC layer is restored from the transferred decoding result of the physical layer. Then, the MAC layer performs error detection, determines whether the signal of the MAC layer transmitted by the radio communication apparatus as a transmission source of the reception frame has been properly restored.

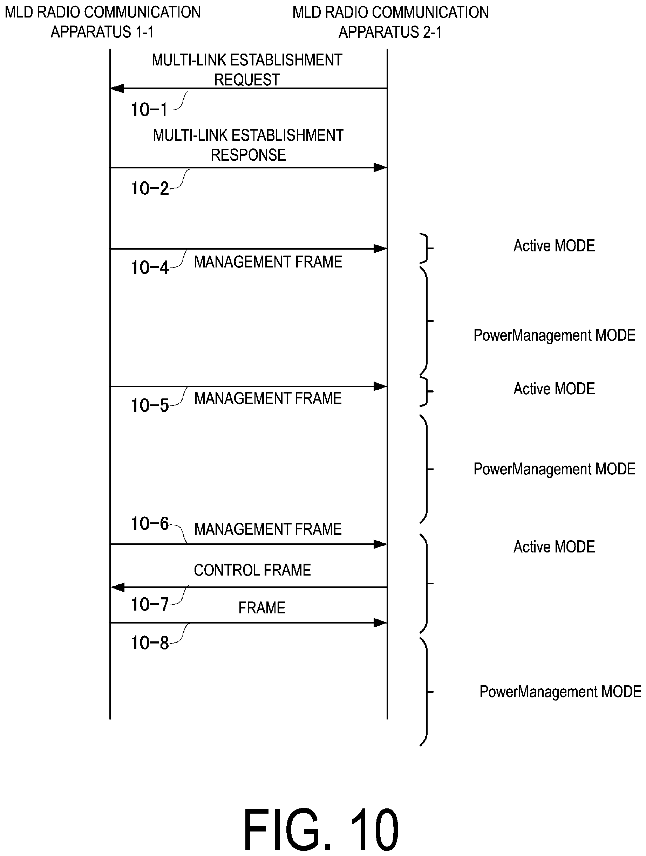

FIG. 10 illustrates an outline of a procedure related to the multi-link of the present embodiment by using an MLD radio communication apparatus 1-1 (also referred to as the MLD access point apparatus herein) and an MLD communication apparatus 2-1 (also referred to as the MLD station apparatus herein) as examples of radio communication apparatuses. In this case, the MLD radio communication apparatus 2-1 that transmits a multi-link establishment request 10-1 is referred to as a multi-link initiator, and the MLD radio communication apparatus 2-1 transmits the multi-link establishment request 10-1 to the MLD radio communication apparatus 1-1. The multi-link establishment request may include control information such as multi-link capability information (Capability information) of the subject radio communication apparatus and multi-link operation mode information regarding the multi-link requested to be established. The multi-link establishment request 10-1 may be included in a management frame such as an Association Request frame. Note that the multi-link initiator may be the MLD radio communication apparatus 1-1 instead of the MLD radio communication apparatus 2-1. The multi-link establishment request may be transmitted independently and separately on each link, or may be transmitted on one of the links constituting the multi-link.

In response to receiving the multi-link establishment request, the MLD radio communication apparatus 1-1 transmits a multi-link establishment response to the MLD radio communication apparatus 2-1. The multi-link establishment response 10-2 may include control information such as multi-link capability information of the subject radio communication apparatus, establishment state information indicating whether multi-link establishment has succeeded, a multi-link ID used to identify the multi-link, and multi-link operation mode information. The multi-link operation mode information included in the multi-link establishment response may be finally determined based on the multi-link operation mode included in the multi-link establishment request received from the MLD radio communication apparatus 2-1 and the multi-link operation mode that can be provided by the MLD radio communication apparatus 1-1. The multi-link operation mode information may include information regarding a frequency band (or channel, or sub-channel) used in the established multi-link communication. In a case that the establishment state information indicates success, the multi-link is established that conforms to the multi-link operation mode information included in the multi-link establishment response. In a case that the establishment state information indicates failure, the multi-link is not established. The multi-link establishment response 10-2 may be included in a management frame such as an Association Response frame.

The radio frequency band supported by the MLD radio communication apparatus according to the present embodiment is not limited to any particular frequency band. For example, the MLD radio communication apparatus can support a microwave band (first frequency band) represented by the 4GHz band, the 5GHz band, and the 6GHz band, and a high frequency band (second frequency band) represented by the 60GHz band (millimeterwave band) and the 300GHz band (terahertz-wave band). In particular, the high frequency band involves a larger propagation loss than the microwave band, and thus a high antenna gain is required to exchange frames. The MLD radio communication apparatus according to the present embodiment can support analog beamforming based on control of a phase shifter or the like, digital beamforming based on control of the phase and amplitude of a digital signal, and hybrid beamforming that is a combination of analog beamforming and digital beamforming. Hereinafter, simple reference to beamforming indicates any one of the above-described three types of beamforming. The MLD radio communication apparatus according to the present embodiment can include multiple sub radio communication apparatuses, and for example, a first sub radio communication apparatus and a second sub radio communication apparatus can each support beamforming. The beamforming according to the present embodiment includes changing an antenna pattern used in a case that a frame is transmitted. The beamforming according to the present embodiment includes changing an antenna pattern used in a case that a frame is received.

In the present embodiment, a method of distinguishing among antenna patterns is not limited to any particular method. For example, in a case that the radio communication apparatus according to the present embodiment can use multiple antenna patterns, the antenna patterns can be distinguished from one another based on the width (half-width) of a main lobe included in each antenna pattern. The radio communication apparatus according to the present embodiment can configure an identifier (beam ID, sector ID) for each of multiple antenna patterns. The radio communication apparatuses that exchange frames preferably share the number of beam IDs that can be configured, the width of the main lobe of the antenna pattern indicated by each beam ID, and the direction of the main lobe. For example, the radio communication apparatuses according to the present embodiment can share a beam ID that indicates an antenna pattern having the largest main lobe width among antenna patterns that can be configured by the radio communication apparatuses. The radio communication apparatuses according to the present embodiment can share a beam ID that designates an antenna pattern having the narrowest main lobe width among antenna patterns that can be set by the radio communication apparatuses.

As described above, supporting beamforming is essential for performing efficient frame exchange in the high frequency band. However, performing highly accurate beamforming requires hardware such as an antenna and a phase shifter to have highly accurate quality, and involves complicated signal processing. In the high frequency band, a higher frequency used consistently increases a gain required for beamforming, and this means that the half width of the main lobe formed by beamforming decreases, and much time is required for beam sweeping in which a beam in an appropriate direction is swept. The time required for beam sweeping is an overhead and thus reduces frequency efficiency.

Therefore, the radio communication apparatuses according to the present embodiment include a communication method of efficiently exchanging frames in the high frequency band by utilizing a sub radio communication apparatus included in each of the radio communication apparatuses. Specifically, the access point apparatus and the station apparatus included in the same BSS can transmit a response frame for a frame transmitted in the high frequency band by using a frequency band other than the high frequency band. With such control, for example, in a case that the access point apparatus transmits a frame to the station apparatus, the station apparatus only needs to include a function of receiving frames with respect to the high frequency band. The station apparatus need not include the function of transmitting the response frame in the high frequency band (or need not always implement the communication method of transmitting the response frame), and thus costs for the station apparatus can be greatly reduced or resources for transmitting the response frame can be reduced.

In the radio communication apparatus according to the present embodiment, the first sub radio communication apparatus and the second sub radio communication apparatus can perform frame exchange in different frequency bands. For example, the first sub radio communication apparatus (first sub access point apparatus, first sub station apparatus) supports a first link for performing communication in the high frequency band (first frequency band), and the second sub radio communication apparatus (second sub access point apparatus, second station apparatus) supports a second link for performing communication in the microwave band (second frequency band).

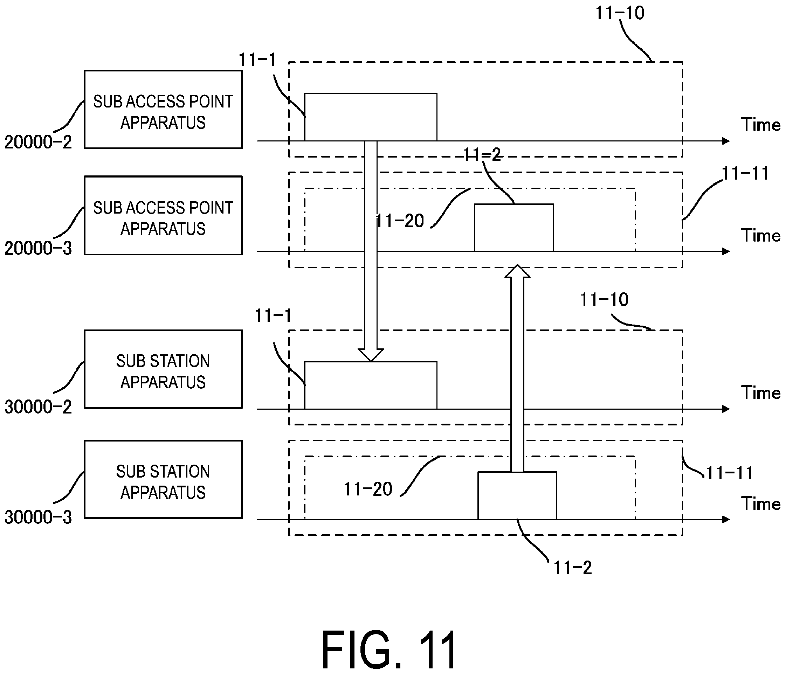

FIG. 11 is a schematic diagram illustrating an example of communication according to the present embodiment. In a case described in the example of FIG. 11, an access point apparatus including a first sub access point apparatus 20000-2 and a second sub access point apparatus 20000-3 exchange frames with a station apparatus including a first sub station apparatus 30000-2 and a second sub station apparatus 30000-3. The first sub access point apparatus 20000-2 and the first sub station apparatus 30000-2 are connected using a first link 11-10. The second sub access point apparatus 20000-3 and the second sub station apparatus 30000-3 are connected by using a second link 11-11. The first link and the second link are configured in different frequency bands. In the following description, it is assumed that the high frequency band is configured for the first link and that the microwave band is configured for the second link, that is, the frequency band including lower frequencies than the frequency band for the first link is configured for the second link.

A transmitter of the first sub access point apparatus transmits a first frame 11-1 over the first link. The first frame is a frame that causes a radio communication apparatus that has received the first frame to transmit a response frame. Here, the response frame is not limited to any particular frame, but may be, for example, a response confirmation frame (Ack frame) indicating that the first frame has been correctly received, a medium reservation response frame (CTS frame) for a medium reservation request frame (RTS frame), or a trigger reference data frame (TB PPDU frame) for a trigger frame. Before the first sub access point apparatus transmits the first frame through the first link, the second sub access point apparatus according to the present embodiment performs, over the second link, carrier sense for reserving a radio medium, and reserves the radio medium for a time period 11-20. During the time period 11-20, the time required for transmitting a response frame 11-2 may be reserved, and the time may also be reserved during which, after transmitting the response frame 11-2, the second sub station apparatus or another station apparatus transmits another frame. Instead of securing the time period 11-20 before transmitting the first frame 11-1, the second sub access point may reserve the time period 11-20 by performing carrier sense over the second link after transmitting the first frame 11-1. For the time period 11-20 in this case, the second sub access point may reserve a time period from the time when the carrier sense is performed until the time when the second sub station apparatus can end the transmission of the response frame 11-2.

The difference between the transmission start timing for the first frame and the start time of the time period 11-20 is preferably equal to or shorter than a prescribed time, and the start time of the time period 11-20 is particularly preferably earlier than the transmission start timing for the first frame. The prescribed time may be configured in real time, or may be configured in the number of prescribed unit times such as an OFDM signal unit, a time slot unit, or a frame unit. The prescribed time can be configured for each link supported by the radio communication apparatus.

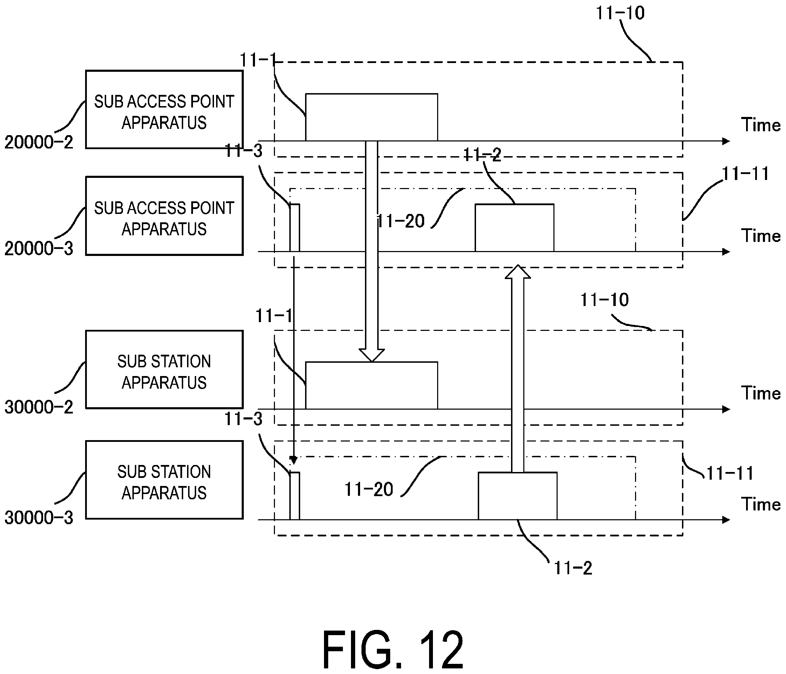

A receiver of the first sub station apparatus receives the first frame over the first link. The second sub station apparatus transmits the response frame 11-2 triggered by the first frame through the second link in the time period 11-20 in which the second sub access point apparatus reserves a radio medium by carrier sense. The second sub station apparatus may transmit the response frame 11-2 by assuming that the time period 11-20 are reserved in a case that the first sub station apparatus successfully receives the first frame. By transmitting a control frame to the second sub station apparatus, the second sub access point apparatus may explicitly notify the second sub station apparatus that the time period 11-20 are reserved. Various types of control frames can be used as the control frame. For example, a control frame capable of configuring the NAV, such as an RTS frame, a PS-Poll frame, or a trigger frame, may be applied. An example of a sequence of procedures will be described with reference to FIG. 12. The numbers used in FIG. 12 have the same meaning as the numbers used in FIG. 11, and a control frame 11-3 is added to FIG. 12. Before the first sub access point apparatus transmits the first frame 11-1, the second sub access point apparatus performs carrier sense, and transmits, as a control packet 11-3, a trigger frame granting a transmission right to the second sub station apparatus in a case that the carrier sense is successful. A duration corresponding to the time period 11-20 is configured as the NAV of the trigger frame. After the control packet 11-3 is transmitted, the first sub station apparatus transmits the first frame 11-1 to the first sub station apparatus. After the first sub station apparatus has successfully received the first frame 11-1, the second sub station apparatus transmits the response frame 11-2 within the time period 11-20.

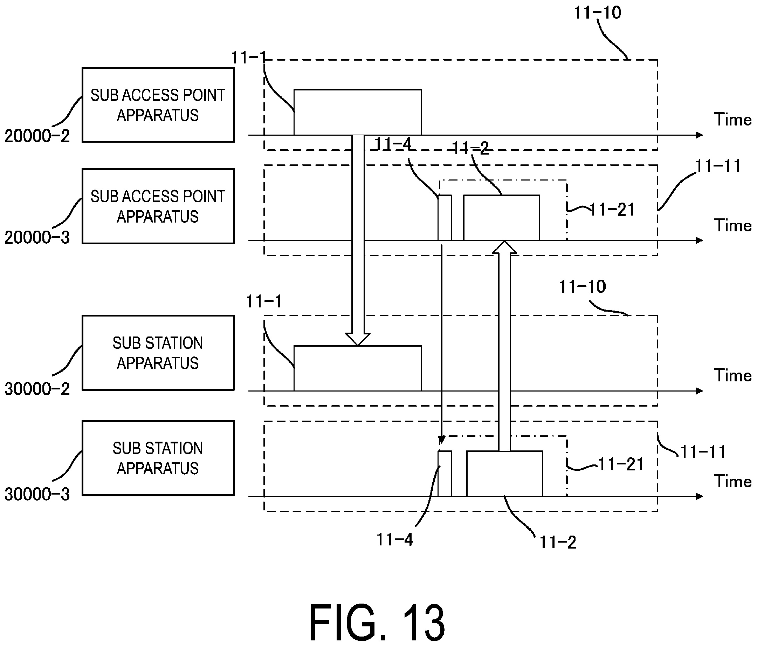

Then, an example of a procedure for securing a time period after the first sub access point apparatus transmits the first frame will be described with reference to FIG. 13. The numbers used in FIG. 13 are the same as those in FIG. 11, except for a time period 11-21 used for transmitting the response frame 11-2 for the first frame 11-1 and the control frame 11-4 used for securing the time periods 11 to 21. In this example, a Block Ack Request (BAR) frame is used as the control frame 11-4 used to reserve the time period 11-21. The first sub access point apparatus transmits the first frame to the first sub station apparatus. After transmitting the first frame, the second sub access point apparatus performs carrier sense, and after succeeding in the carrier sense, transmits, to the second sub station apparatus, a BAR frame 11-4 for requesting transmission of a block Ack corresponding to the first frame 11-1. The NAV configured in the BAR frame is a period corresponding to the time period 11-21 configured to transmit the response frame 11-2. The second sub station apparatus that has received the BAR frame 11-4 transmits the response frame 11-2 to the second sub access point apparatus in the range of the time period 11-21.

The second sub access point apparatus need not perform carrier sense through the second link in a case of transmitting the response frame. The access point apparatus can include, in the first frame, information indicating whether to perform carrier sense through the second link in a case of transmitting the response frame.

The station apparatus according to the present embodiment can transmit, through the second link, a response frame for the first frame transmitted through the first link. This indicates that the first sub station apparatus supporting the first link only needs to include the function of receiving frames on the first link. Accordingly, the first sub station apparatus need not necessarily include a beamforming function for frame transmission, but may include a beamforming function for receiving frames. This enables a reduction in the cost of the station apparatus including the first sub station apparatus.

The signal transmitted by the first frame transmitted by the radio communication apparatus according to the present embodiment through the first link can include an error detection code that enables the radio communication apparatus that has received the first frame to detect whether or not the first frame has been correctly received. The radio communication apparatus can include multiple error detection codes in the first frame. For example, the radio communication apparatus can include, in the first frame, at least one of a first error detection code that enables error detection in the PHY layer and a second error detection code that enables error detection in the MAC layer. Note that the first error detection code and the second error detection code are not limited to any particular code. For example, the first frame may include information encoded by a prescribed method, such as a cyclic redundancy check code (CRC code). The first error detection code also includes a method of determining that reception is successful in a case that a prescribed time period of the first frame can be received with power higher than prescribed reception power (for example, CCA level).

The transmitter of the first sub access point apparatus can transmit, over the first link, the first frame including the first error detection code. In a case that the first sub station apparatus according to the present embodiment receives the first frame including the first error detection code, the second sub station apparatus can transmit, through the second link, a response frame including an error detection result based on the first error detection code. At this time, in a case that the second sub access point apparatus reserves a radio medium, the second sub station apparatus may transmit a response frame including an error detection result through the second link without performing carrier sense.

In a case that the transmitter of the first sub access point apparatus includes the first error detection code and the second error detection code in the first frame, the second sub station apparatus can transmit the response frame based on the detection result of the first error detection code without waiting for error detection by the second error detection code. At this time, a signal included in the response frame may be only a signal of the PHY layer. In other words, the radio communication apparatus according to the present embodiment can recognize information indicating whether frame exchange has been correctly performed in the high frequency band by exchanging frames including only the signal of the PHY layer. By performing control in this manner, the radio communication apparatus according to the present embodiment can determine whether the cause of a failure in frame transmission in the high frequency band lies in the PHY layer, for example, the antenna pattern forming method, or in the MAC layer, for example, excessive frame aggregation leading to timeout. In particular, the exchange of signals in the PHY layer can be performed with a low delay, and thus the radio communication apparatus according to the present embodiment can immediately take error countermeasures for the PHY layer, such as immediate re-performance of beam sweeping.

In a case that the second sub station apparatus has transmitted no response frame, for example, in a case that, with a radio medium reserved by the second sub access point apparatus, the first sub station apparatus fails to receive the first frame, the radio medium may remain reserved. In such a case, the second sub access point apparatus may transmit a control frame to cancel (reset) the reservation of the radio medium. Although the type of the control frame is not limited, as an example, a CF-End frame, an Ack frame, or the like may be used.

### 2. Second Embodiment

The radio communication apparatus according to the present embodiment can change a transmit power configured for the response frame triggered by the frame received through the first link, based on the link through which the response frame is transmitted.

As an example, a case will be described below in which an access point apparatus including first sub access point apparatus 20000-2 and second sub access point apparatus 20000-3 exchanges frames with a station apparatus including first sub station apparatus 30000-2 and second sub station apparatus 30000-3. The first sub access point apparatus 20000-2 and the first sub station apparatus 30000-2 are connected using a first link 11-10. The second sub access point apparatus 20000-3 and the second sub station apparatus 30000-3 are connected by using a second link 11-11. The first link and the second link are configured in different frequency bands.

The first sub access point apparatus transmits a first frame that triggers a response frame by using the first link. In a case that the first sub station apparatus receives the first frame, the station apparatus transmits the response frame from at least one of the first sub station apparatus and the second sub station apparatus. The station apparatus can configure a link through which the response frame is transmitted based on an indication from the access point apparatus including the first sub access point apparatus. The station apparatus can configure the link through which the response frame is transmitted based on the Capability of the station apparatus.

The station apparatus according to the present embodiment can configure the transmit power configured for the response frame based on the link through which the response frame is transmitted. In other words, the station apparatus according to the present embodiment can configure different values for the transmit power (first transmit power) that the first sub station apparatus included in the station apparatus configures for the response frame and for the transmit power (second transmit power) that the second sub station apparatus included in the station apparatus configures for the response frame. Note that the transmit power in the present embodiment can include at least some or all of the maximum transmit power, average transmit power, an operating region of a transmission amplifier, and equivalent isotropic radiated power (EIRP) including antenna gain. The radio communication apparatus according to the present embodiment can control the effect of the response frame on another radio communication system and the reception quality of the response frame by flexibly varying the transmit power configured for the response frame.

The transmit power configured for the response frame is not limited to any particular value. For example, in a case that the frequency of the first frequency band configured for the first link is higher than the frequency of the second frequency band configured for the second link, the second transmit power that the second sub station apparatus configures for the response frame can be configured as a value lower than the first transmit power that the first sub station apparatus configures for the response frame.

The first sub station apparatus and the second sub station apparatus according to the present embodiment can determine the transmit power configured for the response frame based on the CCA level configured for the sub station apparatuses. For example, in a case that the CCA level configured for the first sub station apparatus is configured as -82 dBm/20 MHz, the first sub station apparatus may configure the transmit power configured for the response frame as -82 dBm or less. In a case that the first sub station apparatus and the second sub station apparatus according to the present embodiment transmit the response frame with a transmit power equal to or less than a prescribed value such as the CCA level described above, the first sub station apparatus and the second sub station apparatus can transmit the response frame without performing carrier sense for reserving a radio medium.

The first sub station apparatus and the second sub station apparatus according to the present embodiment can determine the transmit power configured for the response frame based on the information configured by the BSS including the sub station apparatuses or the access point apparatus managing the BSS. For example, the access point apparatus according to the present embodiment can include, in the first frame triggering the response frame, information associated with interference power that the access point apparatus can allow. In this case, the access point apparatus can configure each of the first link and the second link with the information associated with the allowable interference power.

The station apparatus that has received the first frame can determine the transmit power configured for the response frame triggered by the first frame based on the information associated with the allowable interference power. For example, in a case that the information associated with the allowable interference power is an interference power value that the first sub access point apparatus can allow, the first sub station apparatus can configure, for the transmit power for the response frame, a value lower than a value obtained by subtracting reception power for at least a part of the first frame (for example, the reception power for the PHY header portion) from the information associated with the allowable interference power.

Note that the transmit power that the first sub station apparatus (or the second sub station apparatus) in the present embodiment configures in a case of transmitting the response frame can be configured as a transmit power different from the transmit power that the first sub station apparatus (or the second sub station apparatus) configures in a case of transmitting a frame (for example, a data frame) other than the response frame through the first link (or the second link). At this time, the information (first BSS color information) indicating the BSS that the first sub station apparatus (or the second sub station apparatus) in the present embodiment configures in the response frame can be configures as a value different from the information (second BSS color information) indicating the BSS that the first sub station apparatus (or the second sub station apparatus) in the present embodiment configures in a frame other than the response frame. The first BSS color information and the second BSS color information can be configured by the access point apparatus. The access point apparatus can configure the first BSS color and the second BSS color for each link. By performing control in this manner, the radio communication apparatus belonging to the BSS can determine whether the received frame is the response frame. For example, the radio communication apparatus belonging to the BSS can change the CCA level for the received frame between a case where the received frame can be determined as the response frame and a case where the received frame can be determined as a frame other than the response frame (including a case where the frame fails to be determined to be the response frame or a frame other than the response frame).

The radio communication apparatus according to the present embodiment can configure the transmit power configured for the response frame as, for example, the CCA level or less, but can also control the beamforming configured for the response frame in order to minimize the effect on another communication apparatus in the vicinity. For example, the first sub station apparatus according to the present embodiment can transmit the response frame using an antenna pattern (second antenna pattern) different from the antenna pattern (first antenna pattern) used in a case that the first frame triggering the response frame is received from the first sub access point apparatus.

In a case that the first sub station apparatus according to the present embodiment uses, as the second antenna pattern, an antenna pattern different from the first antenna pattern, an antenna pattern having a smaller main lobe width than the first antenna pattern can be used as the second antenna pattern. In this case, the main lobe of the second antenna pattern is preferably a part of the main lobe of the first antenna pattern. In a case that the first sub station apparatus can use multiple antenna patterns, an antenna pattern having a minimum main lobe width among the multiple antenna patterns is preferably used as the second antenna pattern configured in a case that the response frame is transmitted. For example, in a case that the first sub station apparatus can use an antenna pattern (quasi-omni antenna pattern) having a relatively large main lobe width and an antenna pattern (directional antenna pattern) having a small main lobe width, the directional antenna pattern can be used for transmitting the response frame. The first sub access point apparatus according to the present embodiment can notify the first sub station apparatus of the antenna pattern configured for the response frame. The first sub station apparatus according to the present embodiment can notify the first access point apparatus of the antenna pattern configured for the response frame. As described above, by exchanging the information associated with the antenna pattern configured for the response frame, the radio communication apparatuses can also determine the current status of beamforming.

The radio communication apparatus according to the present embodiment can set a response time (response time range) for the response frame based on the link through which the first frame triggering the response frame is received. Here, the response time indicates a time period during which the radio communication apparatus waits in a reception operation state in expectation of transmission of a response frame after completion of transmission of the first frame. For example, in a case that the time period is defined as 20 us, the radio communication apparatus determines that the transmission of the first frame has failed in a case that the reception of the response frame fails to be initiated within the 20 us after the transmission of the first frame is completed. In a case that the reception of the response frame is not completed during the time period, the transmission of the first frame can be determined to have failed. Note that the response time can be configured in real time as described above, or can be configured by the number of prescribed unit times such as the OFDM signal unit, the time slot unit, the frame unit, or a Time Unit (TU) (1024 microseconds) managed by MAC.

In a case that the first sub access point apparatus receives the first frame, the station apparatus can transmit a response frame triggered by the first frame from at least one of the first sub station apparatus and the second sub station apparatus, and for the response time for the first frame, different values are configured for the response time (first response time, first response time range) configured in a case that the response frame is transmitted through the first link and for the response time (second response time, second response time range) configured in a case that the response frame is transmitted through the second link.

In the present embodiment, the times configured for the first response time range and the second response time range are not limited to any particular values. For example, in a case that the frequency of the first frequency band used for the first link for which the first response time range is configured is higher than the frequency of the second frequency band used for the second link for which the second response time range is configured, the configuration may be such that the second response time range is longer than the first response time range.

Here, the fact that the second response time range is longer than the first response time range includes a case where, as the actual time, a time longer than the first response time range is configured as the second response time range. In a case that the response time is configured by the number of prescribed unit times, the fact that the second response time range is longer than the first response time range includes a case where the prescribed unit time configured for the second link is longer than the prescribed unit time configured for the first link. In a case that the response time is configured by the number of prescribed unit times, the fact that the second response time range is longer than the first response time range includes a case where the number of prescribed unit times configured for the second link is larger than the number of prescribed unit times configured for the first link.

### 3. Third Embodiment

The BSS according to the present embodiment can include multiple access point apparatuses. For example, the BSS according to the present embodiment may include a first access point apparatus and a second access point apparatus, and each of the first access point apparatus and the second access point apparatus may include at least one sub access point apparatus. Note that the number of sub access point apparatuses included in the first access point apparatus need not necessarily be the same as the number of sub access point apparatuses included in the second access point apparatus.

The station apparatus belonging to the BSS according to the present embodiment can be connected to each of the first access point apparatus and the second access point apparatus. The station apparatus can be exclusively or simultaneously connected to each access point apparatus. In a case that the station apparatus includes multiple sub station apparatuses, the multiple sub station apparatuses can be connected to the respective sub access point apparatuses included in the first access point apparatus and the second access point apparatus. For example, the first sub station apparatus may connect to the first sub access point of the first access point by using the first link, while the second sub station apparatus may connect to the second sub access point apparatus of the second access point apparatus by using the second link.

In a case of receiving, over the first link, the first frame triggering a response frame, the station apparatus according to the present embodiment can transmit the response frame to an access point apparatus as a destination, the access point apparatus being different from the access point apparatus including the sub access point apparatus having transmitted the first frame, the access point apparatus being any one access point apparatus (or any one of the sub access point apparatuses included in the access point apparatus) of the multiple access point apparatuses included in the BSS. In this case, the station apparatus can transmit the response frame through the second link different from the first link. The access point apparatus that has transmitted the first frame can indicate the destination of the response frame to the station apparatus. For example, the access point apparatus can include, in the PHY header of the first frame, information indicating the destination of the response frame.

According to the method described above, the access point apparatus and the station apparatus can perform efficient frame exchange using the high frequency band.

### 4. Matters Common for All Embodiments

Although the communication apparatuses according to the present invention can perform communication in a frequency band (frequency spectrum) that is a so-called unlicensed band that does not require permission to use from a country or a region, frequency bands usable are not limited thereto. The communication apparatus according to the present invention can exhibit its effect also in a frequency band called a white band, which is actually not used for the purpose of preventing frequency j amming and the like even though permission to use the frequency band is given from a country or a region for a specific service (for example, a frequency band allocated for television broadcasting but is not used depending on regions), or in a shared spectrum (shared frequency band) which is expected to be shared by multiple service providers, for example.

A program that operates in the radio communication apparatus according to the present invention is a program (a program for causing a computer to function) for controlling the CPU or the like to implement the functions of the aforementioned embodiments related to the present invention. In addition, information handled by these apparatuses is temporarily accumulated in a RAM at the time of processing, is then stored in various types of ROMs and HDDs, and is read by the CPU as necessary to be corrected and written. A semiconductor medium (e.g., a ROM, a non-volatile memory card, or the like), an optical recording medium (e.g., a DVD, an MO, an MD, a CD, a BD, or the like), a magnetic recording medium (e.g., a magnetic tape, a flexible disk, or the like), and the like can be examples of recording media for storing programs. In addition to implementing the functions of the aforementioned embodiments by performing loaded programs, the functions of the present invention may be implemented in processing performed in cooperation of an operating system, other application programs, and the like based on instructions of those programs.

In a case of delivering these programs to market, the programs can be stored and distributed in a portable recording medium, or transferred to a server computer connected via a network such as the Internet. In this case, the storage device serving as the server computer is also included in the present invention. A part or an entirety of the communication apparatuses in the aforementioned embodiments may be implemented as an LSI that is typically an integrated circuit. The functional blocks of the communication apparatuses may be individually implemented as chips or may be partially or completely integrated into a chip. In a case that the functional blocks are made as integrated circuits, an integrated circuit controller for controlling them is added. Note that it goes without saying that the present invention also includes a case where a program or configuration information is downloaded from a server computer in order to implement at least a part of the functions of the above-described embodiment.

The circuit integration technique is not limited to LSI, and may be realized as dedicated circuits or a multi-purpose processor. Moreover, in a case that a circuit integration technology that substitutes an LSI appears with the advance of the semiconductor technology, it is also possible to use an integrated circuit based on the technology.

Note that, the invention of the present application is not limited to the above-described embodiments. The radio communication apparatus according to the invention of the present application is not limited to the application in the mobile station apparatus, and, needless to say, can be applied to a fixed-type electronic apparatus installed indoors or outdoors, or a stationary-type electronic apparatus, for example, an AV apparatus, a kitchen apparatus, a cleaning or washing machine, an air-conditioning apparatus, office equipment, a vending machine, and other household apparatuses.

Although the embodiments of the invention have been described in detail above with reference to the drawings, a specific configuration is not limited to the embodiments, and designs and the like that do not depart from the essential spirit of the invention also fall within the claims.

### Industrial Applicability

An aspect of the present invention can be preferably used in the access point apparatus, the station apparatus, and the communication method.

### Reference Signs List

1-1, 1-2 (MLD) Access point apparatus
2-1 to 2-6 (MLD) Station apparatus
3-1, 3-2 Radio communication system
10000-1 Radio communication apparatus
10001-1 Higher layer processing unit
10001a-1 Multi-link controller
10002-1 Controller
10002a-1 CCA unit
10002b-1 Backoff unit
10002c-1 Transmission determination unit
10003-1 Transmitter
10003a-1 Physical layer frame generator
10003b-1 Radio transmitter
10004-1 Receiver
10004a-1 Radio receiver
10004b-1 Signal demodulator
10004c-1 Reception quality measuring unit
10005-1 Antenna unit
20000-1 MLD access point apparatus
20000-2, 20000-3, 20000-4 Sub radio communication apparatus (sub access point apparatus)
30000-1 MLD station apparatus
30000-2, 30000-3, 30000-4 Sub radio communication apparatus (sub station apparatus)
10-1 Multi-link establishment request
10-2 Multi-link establishment response
10-4, 10-5, 10-6 Management frame
12-11 12-12 13-11 13-12 14-11 14-12 14-21 14-22 15-11 15-12 16-11 16-12 16-13 16-14 17-11 17-12 17-13 17-14 Frame structure
14-1, 14-2 Frame combination

## Claims

1. A station apparatus for connecting to an access point apparatus, the station apparatus comprising:
a receiver configured to receive a first frame; and
a transmitter configured to transmit a response frame for the first frame in a second frequency band that is the same as or different from a first frequency band in which the first frame is received, wherein
the transmitter transmits the response frame at a different transmit power in a case of transmitting the response frame in the first frequency band and in a case of transmitting the response frame in the second frequency band.

2. The station apparatus according to claim 1, wherein
in a case that the second frequency band includes a frequency lower than the first frequency band, a transmit power in a case that the transmitter transmits the response frame in the second frequency band is lower than a transmit power in a case that the transmitter transmits the response frame in the first frequency band.

3. The station apparatus according to claim 1, wherein
a transmit power for the response frame is equal to or less than a CCA level configured in a BSS to which the station apparatus belongs.

4. The station apparatus according to claim 1, wherein
the station apparatus acquires, from the access point apparatus, information associated with interference power allowed by the access point apparatus, and
a transmit power for the response frame is lower than an allowed transmit power calculated from the information associated with the interference power.

5. The station apparatus according to claim 1, wherein
a first response time range used in a case that the response frame is transmitted in the first frequency band and a second response time range used in a case that the response frame is transmitted in the second frequency band are configured respectively, and
a range of configured values for the second response time range is wider than a range of configured values for the first response time range.

6. The station apparatus according to claim 1, wherein
the station apparatus connects to a BSS including multiple access point apparatuses including the access point apparatus, and
transmits the response frame for the first frame transmitted from the access point apparatus to at least one access point apparatus of the multiple access point apparatuses, the at least one access point apparatus being different from the access point apparatuses included in the BSS.

7. An access point apparatus for connecting to a station apparatus, the access point apparatus comprising:
a transmitter configured to transmit a first frame, and
a receiver configured to receive a response frame for the first frame in a second frequency band that is the same as or different from a first frequency band in which the first frame is transmitted, wherein
a transmit power configured for the response frame in a case that the first frequency band is used for transmission is different from a transmit power configured for the response frame in a case that the second frequency band is used for transmission.

8. A communication method for a station apparatus for connecting to an access point apparatus, the communication method comprising:
receiving a first frame; and
transmitting a response frame for the first frame in a second frequency band that is the same as or different from a first frequency band in which the first frame is received, wherein
a transmit power varies in a case that the response frame is transmitted in the first frequency band and in a case that the response frame is transmitted in the second frequency band.
